# EUROPÄISCHE PATENTSCHRIFT

(11) **EP 3 217 053 B1**
(45) Veröffentlichungstag und Bekanntmachung des Hinweises auf die Patenterteilung: **05.12.2018**
(21) Anmeldenummer: 17155104.7
(22) Anmeldetag: 08.02.2017
(51) Int. Cl.: F16K 31/163, F15B 15/06

(54) **DREHANTRIEB, SCHEIBENVENTIL UND GETRÄNKEABFÜLLANLAGE**
ROTARY DRIVE, DISC VALVE AND BEVERAGE DISPENSING MACHINE
SERVOMOTEUR, VANNE PAPILLON ET DISPOSITIF D'EMBOUTEILLAGE

(30) Priorität: 09.03.2016 DE 102016203873
(43) Veröffentlichungstag der Anmeldung: 13.09.2017
(73) Patentinhaber: Evoguard GmbH, 93149 Nittenau (DE)
(72) Erfinder: Justl, Johann, 93149 Nittenau (DE)
(74) Vertreter: Grünecker Patent- und Rechtsanwälte PartG mbB

(56) Entgegenhaltungen:
- DE-A1-102010 002 621
- DE-C1- 19 950 582
- DE-U1- 9 213 486

## Beschreibung

Die Erfindung betrifft einen Drehantrieb der im Oberbegriff des Anspruchs 1 angegebenen Art und eine Getränkeabfüllanlage gemäß Anspruch 9.

Bei aus DE 19950582 C1 und DE 102010002621 A1 bekannten Drehantrieben für z.B. Scheibenventile in Getränkeabfüllanlagen dieser Art sind die Laufbahnen in den Führungsnuten des Kolbens eben und sind die auf den Enden der Querachse angeordneten Laufbuchsen mit zylindrischem Außenumfang ausgebildet. Dieses Prinzip erfordert es, die Laufbuchsen und gegebenenfalls deren Lager auf den Enden der Querachse zu positionieren, zum Beispiel mit Sicherungsringen oder dergleichen, damit die Laufbuchsen im Betrieb des Drehantriebs nicht z.B. nach außen aus den Führungsnuten austreten. Im Betrieb entsteht jedoch hohe spezifische Flächenpressung zwischen jeder Laufbuchse und den Laufbahnen der Führungsnut. Die hohe Flächenpressung kann in frühzeitigem Verschleiß resultieren. Der Montageaufwand zur erforderlichen Axialsicherung der Laufbuchsen ist unzweckmäßig.

Der Erfindung liegt die Aufgabe zugrunde, einen Drehantrieb, der eingangs genannten Art, zu schaffen, der sich durch eine verminderte Flächenpressung der Laufbuchsen und einen reduzierten Montageaufwand auszeichnet, sowie ein Scheibenventil mit verbessertem Betriebsverhalten und eine Getränkeabfüllanlage mit verringertem Wartungsaufwand anzugeben.

Die gestellte Aufgabe wird mit den Merkmalen des Anspruchs 1, und des Anspruchs 9 gelöst.

Die Bombierung und der Hinterschnitt der mit der Bombierung zusammenwirkenden Laufbahn vergrößert die Kontaktfläche zwischen der Laufbuchse und der Laufbahn, woraus eine verringerte Flächenpressung und geringerer Verschleiß resultieren. Im Betrieb ergeben sich ferner eine sichere Positionierung der Laufbuchse und ein großflächiger Kraftübergang, was sich ebenfalls positiv auf Verschleiß und Lebensdauer auswirkt. Aufgrund des Formschlusses zwischen der Bombierung und dem Hinterschnitt entfällt eine separate Axialsicherung der Laufbuchsen, wodurch sich der Montageaufwand deutlich reduziert.

Die Getränkeabfüllanlage hat u.a. in Bezug auf das Scheibenventil mit diesem Drehantrieb geringeren Wartungsaufwand.

Bei einer zweckmäßigen Ausführungsform ist die Laufbuchse entweder doppeltkonisch oder konvex, vorzugsweise kugelig, bombiert, und verläuft der Hinterschnitt der Laufbahnen entweder doppeltkonisch oder konkav gekrümmt, vorzugsweise einem Kreisbogenabschnitt folgend. Diese geometrische Ausbildung ist herstellungstechnisch einfach, trägt zur optimalen Verminderung der Flächenpressung und zur zuverlässigen Axialführung der Laufbuchse bei.

Bei einer zweckmäßigen Ausführungsform ist die Laufbuchse, vorzugsweise über ein Wälz- oder Gleitlager, nur lose auf das Ende der Querachse aufgesteckt, z.B. bis an eine Querachsen-Schulter. Die Laufbuchse wird durch Formschluss zwischen der Bombierung und wenigstens einem Laufbahn-Hinterschnitt auf dem Ende axial positioniert, ohne zusätzliche Hilfsmittel oder Montageschritte bei der Montage des Drehantriebs.

Die Laufrolle mit eingepresstem Gleitlager braucht nur auf die Querachse aufgesteckt zu werden, was geringen Montageaufwand bedingt.

Besonders zweckmäßig weist jede Führungsnut, vorzugsweise in etwa in der Mitte zwischen beiden Führungsnutenden, eine zumindest vom Außenumfang des Kolbens zugängliche Laufbuchsen-Montieröffnung auf. Die Montieröffnung ist nutzbar, um zumindest die Laufbuchse auf dem Ende der Querachse zu montieren bzw. bei aufgetretenem Verschleiß rasch auszutauschen, ohne Werkzeuge bzw. Sicherungselemente manipulieren zu müssen. Dabei ist die Montieröffnung zweckmäßig in etwa in der Mitte zwischen beiden Führungsnutenden platziert, in einem Bereich der Führungsnuten also, in welchem aufgrund des Verlaufs der Führungsnuten das zu übertragende Drehmoment relativ moderat ist, so dass dort das Problem der Flächenpressung zwischen der Laufbahn und der Laufbuchse unkritisch ist, obwohl vorübergehend die Kontaktfläche in der Laufbahn abnimmt.

Zweckmäßig ist die Montieröffnung so ausgebildet, dass eine Seite des Hinterschnitts in jeder Laufbahn bis etwa zum Grund des Hinterschnitts und entsprechend dem Außenumfang der Laufbuchse bogenförmig abgetragen ist. Die vorübergehende seitliche Unterbrechung des Hinterschnitts der Laufbahn hat an dieser Stelle etwa in der Mitte zwischen den Führungsnutenenden keinen negativen Einfluss auf die Funktion, da die Laufbuchsen durch diesen Bereich unter relativ moderater Last bewegt werden und nicht herausfallen können.

Der Kolben ist zweckmäßig ein Kunststoff-Formteil, vorzugsweise ein Spritzgussteil, beispielsweise aus verstärktem Polyoxymethylen. Dieser Kunststoff ist nur ein Beispiel von mehreren Möglichkeiten und bietet neben hoher Verschleißfestigkeit günstige Reibungsverhältnisse.

Günstig ist z.B. in einer symmetrischen Ausbildung des Drehantriebs der Wirkabstand der Drehmomentstützen von der Achse zur Aufnahme von von den bombierten Laufrollen und den hinterschnittenen Laufbahnen erzeugten Drehmomenten durch einen annähernd rechteckigen Außenquerschnitt der Drehmomentstützen mit annähernd tangential zur Achse liegenden, längeren Rechteckseiten, parallelen, kürzeren Rechteckseiten und im Außenumfang des Kolbens offenen Führungen vergrößert. Der rechteckige Außenquerschnitt erhöht das Biegewiderstandsmoment in Richtung tangential zur Achse, verstärkt den Verankerungsbereich der Drehmomentstütze, und vergrößert im Zusammenspiel mit der im Außenumfang des Kolbens offenen Führung, den Wirkabstand zur Achse, mit welchem die Drehmomente aufgenommen und abgetragen werden, die bei z.B. achssymmetrischer Ausbildung des Drehantriebs mit zwei Laufbuchsen von den bombierten Laufbuchsen und den hinterschnittenen Laufbahnen in den Kolben eingeleitet werden.

Die Drehmomentstütze könnte ggf. an der Innenwand des Gehäuses verankert sein, und zwar entweder nur dort oder auch am Deckel und/oder Boden des Gehäuses. Ferner könnte in einer anderen Ausbildung des Drehantriebs eine einzige Drehmomentstütze ausreichen und/oder nur eine in eine Führungsnut eingreifende Laufbuchse auf der Querachse.

Eine Ausführungsform des Erfindungsgegenstands wird anhand der Zeichnung erläutert. Es zeigen:
- Fig. 1: eine Perspektivansicht eines an einem Scheibenventil, z.B. in einer Getränkeabfüllanlage verbauten Drehantriebs,
- Fig. 2: einen Längsschnitt des Drehantriebs in unbetätigtem Zustand,
- Fig. 3: eine Seitenansicht des Drehantriebs, unter Weglassung eines Gehäuses,
- Fig. 4: einen Schnitt in der Schnittebene IV-IV in Fig. 3,
- Fig. 5: einen Teilschnitt, ähnlich Fig. 4, an der Stelle einer Laufbuchsen-Montieröffnung, und
- Fig. 6: eine Seitenansicht zu Fig. 5.

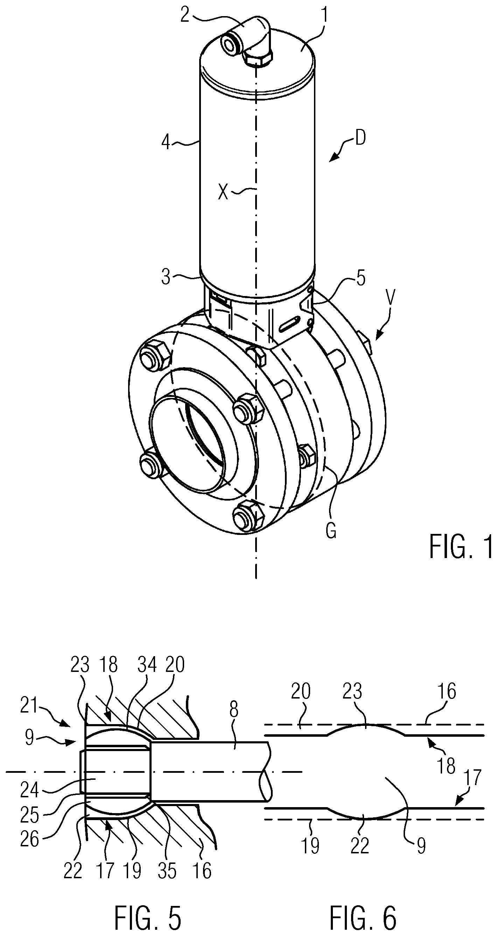

Fig. 1 verdeutlicht als nicht beschränkendes Beispiel ein Scheibenventil V mit einem gestrichelt angeordneten, um eine Achse X hier hin- und herdrehbaren Schließorgan G, welches durch einen Drehantrieb D über einen Schwenkwinkel von beispielsweise etwa 90° zwischen einer Offen- und einer Schließstellung betätigbar ist. Das Scheibenventil V ist beispielsweise in einer Getränkeabfüllanlage (nicht gezeigt) verbaut.

Der Drehantrieb D ist mit einem Fußteil 5 auf dem Scheibenventil V montiert und weist ein hier z.B. zylindrisches Gehäuse 4 mit einem Deckel 1 und einem Boden 3 auf. Der Drehantrieb D wird hier beispielsweise pneumatisch über einen Anschluss 2 im Deckel 1, z.B. gegen eine in Fig. 1 nicht gezeigte Feder, oder elektromagnetisch durch einen nicht gezeigten Linearantrieb betätigt (z.B. sogar in beiden Betätigungsrichtungen).

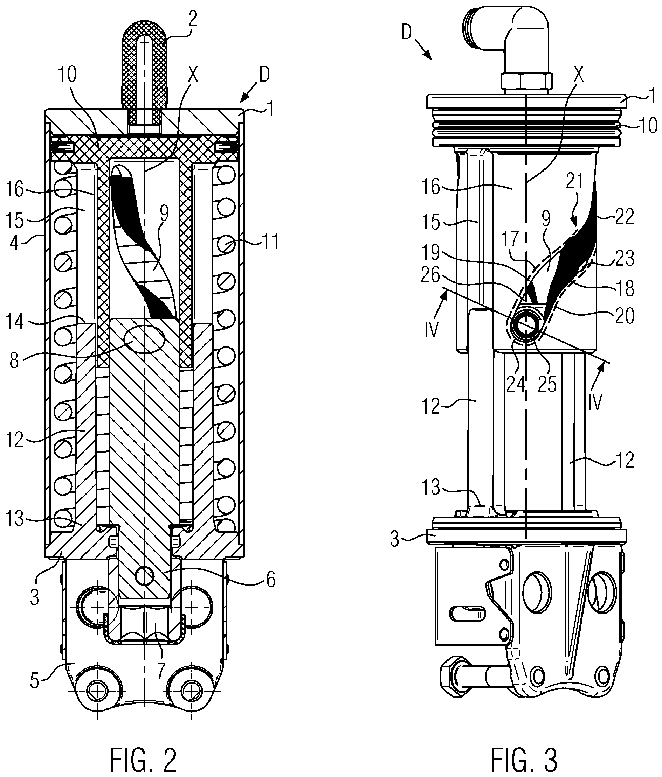

In der Längsschnittansicht in Fig. 2 ist im Boden 13 eine Welle 6 um die Achse X drehbar, die sich nach oben in den Drehantrieb D erstreckt, und am unteren Ende einen Kupplungsteil 7 zum Verbinden mit dem Schließorgan G des Scheibenventils V aufweist.

Im oberen Ende der Welle 6 ist eine zur Achse X senkrechte Querachse 8 festgelegt, die mit ihren Enden 24 (Fig. 3) in diametral gegenüberliegende, schraubengangähnliche Führungsnuten 9 in einer Schürze 16 eines hier als Topf-Kolben ausgebildeten Kolbens 10 eingreift. Der Kolben 10 ist abgedichtet im Gehäuse 4 verschiebbar und wird durch eine Feder 11 beaufschlagt. Der Kolben 10 wird durch Druckmittel, beispielsweise Pressluft, über den Anschluss 2 beaufschlagt oder entlastet und so in Richtung der Achse X hin und her verschoben, wobei die Querachse 8 über die Führungsnuten 9 auf die Welle 6 eine Drehbewegung aufbringt. Damit diese Drehbewegung erzeugbar ist, müssen der Kolben 10 gegen Verdrehen im Gehäuse 4 abgestützt und dabei entstehende Drehmomente aufgenommen werden.

Die Abstützung des Kolbens 10 übernehmen in der gezeigten Ausführungsform zwei Drehmomentstützen 12, die sich von Verankerungsstellen 13 hier z.B. am Boden 3 nach oben in Führungen 15 der Kolbenschürze 16 erstrecken und den Kolben 10 gegen Verdrehen abstützen bzw. die aus der Bewegung der Querachse 8 in den Führungsnuten 9 entstehenden Drehmomente in den Boden 3 einleiten, der über den Fußteil 5 stationär mit dem Scheibenventil V verbunden ist. Freie Enden 14 der Drehmomentstützen 12 erstrecken sich nach oben bis über die Position der Querachse 8. Alternativ könnte eine Drehmomentstütze 12 am Boden 3 und die andere Drehmomentstütze 12 am Deckel 1 verankert sein, wobei sich dann die freien Enden 14 der Drehmomentstütze 12 an der Höhenposition der Querachse 8 überlappen können. In einer weiteren Alternative könnten die Drehmomentstützen nur im Deckel 1 verankert sein, oder könnten mehr als zwei achsparallele Drehmomentstützen 12 und Führungen 15 vorgesehen sein. Ferner könnte die jeweilige Drehmomentstütze 12 zusätzlich oder ausschließlich an der Innenwand des Gehäuses 4 verankert sein.

In der Seitenansicht des Drehantriebs D in Fig. 3 ist der Klarheit wegen das Gehäuse 4 weggelassen, um die Zusammenarbeit zwischen den Drehmomentstützen 12 und den Führungen 15 sowie den Enden 24 der Querachse 8 und den Führungsnuten 9 zu verdeutlichen. Jede Drehmomentstütze kann eine Art Führungsstange oder Führungssteg sein.

Jede Drehmomentstütze 12 ist im Hinblick auf die zu übertragenden Drehmomente bzw. Reaktionskräfte aus den Drehmomenten lastspezifisch gestaltet, um in Wirkrichtung der Drehmomente ein optimal hohes Biegewiderstandsmoment zu haben und einen möglichst großen Wirkabstand zur Achse X zu bieten, der Bauteilbelastungen reduziert. Im Detail hat die Drehmomentstütze 12 einen annähernd rechteckigen Außenquerschnitt mit tangential zur Achse X liegenden längeren Rechteckseiten 30 und dazu im Wesentlichen senkrechten und ebenen, kürzeren Rechteckseiten 29. Das Längenverhältnis zwischen den längeren Rechteckseiten 28 und den kürzeren Rechteckseiten 29 kann etwa 2:1 betragen. In der gezeigten Ausführungsform sind zusätzlich die längeren Rechteckseiten 28 des Außenquerschnitts bombiert (30) bzw. konvex gerundet (alternativ doppeltkonisch), um das Biegewiderstandsmoment weiter zu steigern. Zwischen der zur Achse X weisenden, längeren Rechteckseite 28 und dem Nutgrund 33 der Führung 15 kann ein Zwischenabstand 31 vorgesehen sein, um das Ausmaß der bei der Drehmomentübertragung in Reibkontakt stehenden Kontaktflächen zu minimieren.

Die Drehmomentstütze12 und der Boden 3 bzw. die Drehmomentstütze 12 und der Deckel 1 sind einteilig ausgeführt, beispielsweise als Gussteile.

Die Fig. 2, 3 und 4 verdeutlichen im Zusammenhang mit den Fig. 5 und 6 das Zusammenwirken zwischen der Querachse 8 und den schraubengangähnlichen Führungsnuten 9 im Kolben 10. Der Kolben 10 kann ein Kunststoff-Formteil sein, beispielsweise ein Spritzgussteil aus verstärktem Polyoxymethylen.

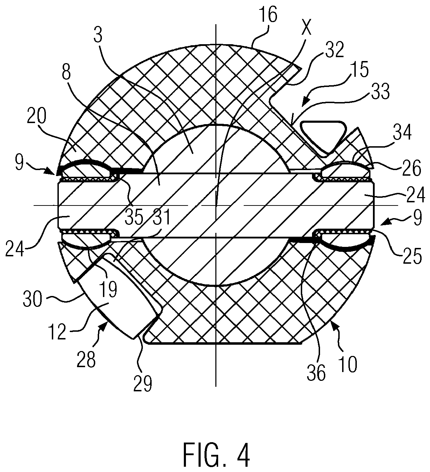

Jede Führungsnut 9 bildet zwei sich gegenüberliegende Laufbahnen 17 und 18 für eine auf dem Ende 24 der Querachse 8 drehbar angeordnete Laufbuchse 26. Jede Laufbuchse 26 ist mit einem Lager 25 (einem Gleitlager gezeigt, oder einem Wälzlager, wie einem Nadellager) auf dem Ende 24 gelagert, wobei das Lager 25 drehfest auf dem Ende 24 festgelegt sein kann. Die in Fig. 4 gezeigten Lager 25 erstrecken sich bis zu Schultern 35 zwischen den Enden 24 und dem Mittelteil der Querachse 8 und weisen in diesem Bereich nach außen vortretenden Ringflansche 36 auf. Die Laufbuchse 26 ist in Axialrichtung der Querachse 8 lose auf das Lager 25 aufgeschoben und wird in der Arbeitsposition axial durch Formschluss zwischen einer Bombierung 34 der Laufbuchse 26 und einem Hinterschnitt 19, 20 der Laufbahnen 17, 18 der Führungsnuten 9 axial positioniert, ohne hierfür zusätzliche Maschinenelemente montieren zu müssen.

Die Bombierung 34 der Laufbuchsen 26 ist in der gezeigten Ausführungsform kugelig, kann auch doppeltkonisch sein (nicht gezeigt). Der Hinterschnitt 19, 20 der Laufbahnen 17, 18 ist passend zur Bombierung 34 entweder einem Kreisbogenabschnitt folgend konkav gekrümmt oder doppeltkonisch (nicht gezeigt).

Um bei der Montage des Drehantriebs D die Laufbuchsen 26 auf die Enden 24 aufschieben zu können, sind in jeder Führungsnut 9 im Bereich einer Laufbuchsen-Montieröffnung 21 die zur Außenseite der Kolbenschürze 16 verlaufenden Seiten des Hinterschnitts 19, 20 bogenförmig bei 22, 23 abgetragen, zweckmäßig in etwa in der Mitte zwischen den Führungsnutenden, d.h., in einem Bereich, in welchem die zu übertragenden Drehmomente ein Minimum sind. Die Abtragungen 22, 23 sind dem Außenumfang der Laufbuchsen 26 entsprechend geformt. Alternativ können die Laufbuchsen 26 mit den Lagern 25 vormontiert und gegebenenfalls aufgeschoben oder aufgepresst werden. Im Betrieb des Drehantriebs sind die Abtragungen 22, 23 unkritisch, weil dieser Bereich von den Laufbuchsen 26 ohne Gefahr eines Abgleitens z.B. nach außen rasch überfahren wird.

Die Ausbildung der Laufbuchsen-Montieröffnung 21 ist in den Fig. 5 und 6 angedeutet. Jede Abtragung 23, 22 reicht etwa bis zur Hälfte der Tiefe jedes Hinterschnitts 19, 20 und läuft im Wesentlichen übergangslos in den tiefsten Bereich des Hinterschnitts 19, 20 ein. Die Abtragung 22, 23 ist gemäß Fig. 6 entsprechend dem kreisförmigen Außenumfang der Laufbuchse 26 gestaltet. Optional liegen die Abtragungen 22, 23 beider Führungsnuten 9 in Bezug auf die Achse X diametral gegenüber, um beide Laufbuchsen 26 (mit oder ohne Lager 25) in derselben Stellung des Kolbens 10 montieren zu können (optional). Die Laufbuchsen 26 können aus Kunststoff oder einem Metall oder einer Legierung bestehen, z.B. hinsichtlich der Gleit- und Abwälz-Eigenschaften passend zum Kunststoffmaterial des Kolbens 10.

Die lastspezifische Ausbildung des Außenquerschnitts der Drehmomentstütze 12 und die dazu passenden Führungen 15 erhöhen die Präzision der Zusammenarbeit, minimieren die Flächenpressung und stellen eine stabile Übertragung der Drehmomente in den Boden 3 (oder den Deckel 1) sicher. Der die Laufbuchsen axial auf der Querachse 8 positionierende Formschluss zwischen der Bombierung 34 und den Hinterschnitten 19, 20 bietet den Vorteil einer reduzierten Flächenpressung, da die in Kontakt stehenden Flächen vergrößert sind, und vereinfacht die Montage durch Wegfall von Maschinenelementen zur Axialsicherung der Laufbuchsen 26 (mit oder ohne die Lager 25).

Es sind ferner nicht gezeigte Ausführungen des Drehantriebs D an Scheibenventilen V zweckmäßig, bei denen nur eine Drehmomentstütze 12 und eine Führung 15 im Kolben 10 vorgesehen sind, und/oder nur eine Führungsnut 9 im Kolben 10 mit nur einer Laufbuchse 26 auf der Querachse 8. Wird der Kolben 10 z.B. durch einen elektromagnetischen Linearantrieb in beiden Richtungen betätigt, (Feder 11 entfällt), kann durch Verankerung der Drehmomentstütze 12 im Gehäuse 4 der Wirkabstand der Drehmomentstütze 12 von der Achse X weiter vergrößert oder die Außenabmessung des Drehantriebs D bei gleicher Leistung verringert werden.

Das mit dem Drehantrieb D ausgestattete Scheibenventil V zeigt ein verbessertes Betriebsverhalten und ist einfach zu montieren. In einer Getränkeabfüllanlage hat das Scheibenventil geringen Wartungsbedarf.

## Patentansprüche

1. Drehantrieb (D), insbesondere für ein Scheibenventil (V), mit einem einen linear geführt verschiebbaren Kolben (10) enthaltenden, einen Deckel (1) und einen Boden (3) aufweisenden Gehäuse (4), wenigstens einer schraubengangähnlichen Führungsnut (9) im Kolben, einer um eine Achse (X) des Drehantriebs drehbaren Welle (6) mit einer Querachse (8), die im Kolben in die wenigstens eine Führungsnut eingreift, und wenigstens einer im Gehäuse (4), insbesondere im Deckel (1) und/oder Boden (2) verankerten, achsparallelen, in eine Führung (15) im Kolben eingreifenden Drehmomentstütze (12), wobei die Querachse (8) an zumindest einem Ende (24) eine eine Laufbahn (17, 18) der Führungsnut (9) kontaktierende Laufbuchse aufweist, **dadurch gekennzeichnet, dass** die Laufbuchse (26) bombiert ist und jede Laufbahn (17, 18) einen der Bombierung (34) entsprechenden Hinterschnitt (19, 20) aufweist.

2. Drehantrieb nach Anspruch 1, **dadurch gekennzeichnet, dass** die Laufbuchse (26) doppeltkonisch oder konvex, vorzugsweise kugelig, bombiert ist, und dass der Hinterschnitt (19, 20) doppeltkonisch oder konkav gekrümmt, vorzugsweise einem Kreisbogenabschnitt folgend, ist.

3. Drehantrieb nach Anspruch 1, **dadurch gekennzeichnet, dass** die Laufbuchse (26), vorzugsweise über ein Wälz- oder Gleitlager (25), lose auf das Ende (24) der Querachse (8) aufgesteckt und durch Formschluss zwischen der Bombierung (34) und wenigstens einem Laufbahn-Hinterschnitt (19, 20) axial auf dem Ende (24) positioniert ist.

4. Drehantrieb nach Anspruch 3, **dadurch gekennzeichnet, dass** das in die Laufbuchse (26) eingepresste Gleitlager (25) mit einem Umfangsflansch (36) lose bis an eine Querachsen-Schulter (35) aufgesteckt und auf der Querachse (8) positioniert ist.

5. Drehantrieb nach Anspruch 1, **dadurch gekennzeichnet, dass** die Führungsnut (9), vorzugsweise in etwa in der Mitte zwischen beiden Führungsnutenden, eine zumindest vom Außenumfang des Kolbens (10) zugängliche Laufbuchsen-Montieröffnung (21) aufweist.

6. Drehantrieb nach Anspruch 5, **dadurch gekennzeichnet, dass** an der Laufbuchsen-Montieröffnung (21) eine Seite des Hinterschnitts (19, 20) in jeder Laufbahn (17, 18) bis etwa zum Grund des Hinterschnitts und entsprechend dem Außenumfang der Laufbuchse (26) bogenförmig abgetragen (22, 23) ist.

7. Drehantrieb nach Anspruch 1, **dadurch gekennzeichnet, dass** der Kolben (10) ein Kunststoff-Formteil, vorzugsweise ein Spritzgussteil, ist.

8. Drehantrieb nach wenigstens einem jeweiligen der vorhergehenden Ansprüche, **dadurch gekennzeichnet, dass** der Wirkabstand der Drehmomentstütze (12) von der Achse (X) zur Aufnahme von von den bombierten Laufbuchsen (26) und den hinterschnittenen Laufbahnen (18, 19) erzeugten Drehmomenten um die Achse (X) durch einen annähernd rechteckigen Außenquerschnitt der Drehmomentstütze (12) mit annähernd tangential zur Achse (X) liegenden, längeren Rechteckseiten (28), parallelen kürzeren Rechteckseiten (29) und im Außenumfang des Kolbens (10) offenen Führungen (15) vergrößert ist.

9. Getränkeabfüllanlage mit wenigstens einem durch einen Drehantrieb (D) gemäß Anspruch 1 betätigbaren Scheibenventil (D).

## Claims

1. Rotary drive (D), in particular for a disc valve (V) comprising a housing (4) having a cover lid (1) and a bottom (3), containing a linearly guided displaceable piston (10), at least one thread-like guiding groove (9) in the piston (10), a shaft (6) rotatable about an axis (X) of the rotary drive (D), the shaft (6) containing a lateral axle (8) engaging into at least one guide groove in the piston, and at least one torque support (12) anchored parallel to the axle in the housing (4), in particular in the cover lid (1) and/or the bottom (2), the torque support (12) engaging into a guidance (15) provided in the piston (10), wherein the lateral axle (8) comprises at least one end (24) a bushing contacting a raceway (17, 18) of the guiding groove (9), **characterized in that** the bushing (26) has a convexly curved cambering (34) and that each raceway (17, 18) has an undercut (19, 20) corresponding with the curvature of the cambering (34).

2. Rotary drive according to claim 1, **characterized in that** the bushing (26) is double-conically or convexly, preferably spherically, curved, and that the undercut (19, 20) is double-conically or concavely curved, preferably following a section of a circle.

3. Rotary drive according to claim 1, **characterized in that** the bushing (26), preferably by means of a roller bearing or plain bearing (25), is loosely fitted on the end (24) of the lateral axle (8) and is positioned axially on the end (24) by a positive form-fit between the curvature of the cambering (34) and at least one raceway-undercut (19, 20).

4. Rotary drive according to claim 3, **characterized in that** the plain bearing (25) pressed into the bushing (26) is put on and positioned on the lateral axle (8) by being fitted loosely with a circumferential flange (36) against a shoulder (35) of the lateral axle (8).

5. Rotary drive according to claim 1, **characterized in that** the guiding groove (9), preferably substantially in the middle between both ends of the guiding groove, comprises a bush-mounting opening (21), which is accessible at least from the outer circumference of the piston (10).

6. Rotary drive according to claim 5, **characterized in that** at the bushing-mounting opening (21), one side of the undercut (19, 20) in each raceway (17, 18) is removed arcuately (22, 23) substantially to a bottom of the undercut and corresponding with the outer contour of the bushing (26).

7. Rotary drive according to claim 1, **characterized in that** the piston (10) is a plastic material molded part, preferably an injection-molded part.

8. Rotary drive according to at least one of the preceding claims, **characterized in that** the acting distance of the torque support (12) from the axis (X) for backing-up torques about the axis (X) generated by the convexly curved bushings (26) and the undercuts of the raceways (18, 19) is extended by a substantially square outer cross-section of the torque support (12), having longer square sides (28) substantially tangential to the axis (X), parallel shorter square sides (29), and by guidances (15) open to the outer circumference of the piston (10).

9. Beverage dispensing machine having at disc valve (D) to be actuated by a rotary drive (D) according to claim 1.

## Revendications

1. Entraînement de rotation (D), notamment destiné à une vanne papillon (V), comprenant un corps (4), qui renferme un piston (10) coulissant, guidé linéairement, et qui présente un couvercle (1) et un fond (3), comprenant également au moins une rainure de guidage (9) similaire à un filet de filetage dans le piston, un arbre (6) rotatif autour d'un axe (X) de l'entraînement de rotation et comportant un axe transversal (8), qui dans le piston vient s'engager dans ladite au moins une rainure de guidage, l'ensemble comprenant également au moins une butée anti-couple (12) ancrée dans le boitier (4), notamment dans le couvercle (1) et/ou le fond (3), qui est parallèle à l'axe de l'entraînement en rotation et s'engage dans un guidage (15) du piston, l'axe transversal (8) présentant, à au moins une extrémité (24), une douille de roulement venant en contact avec un chemin de roulement (17, 18) de la rainure de guidage (9), **caractérisé en ce que** la douille de roulement (26) est bombée et chaque chemin de roulement (17, 18) présente une contre-dépouille (19, 20) correspondant au bombement (34).

2. Entraînement de rotation selon la revendication 1, **caractérisé en ce que** la douille de roulement (26) est bombée de manière doublement conique ou convexe, de préférence de manière sphérique, et **en ce que** la contre-dépouille (19, 20) est d'une courbure doublement conique ou concave, de préférence en suivant un tronçon d'arc de cercle.

3. Entraînement de rotation selon la revendication 1, **caractérisé en ce que** la douille de roulement (26), est emmanchée, de préférence par l'intermédiaire d'un palier de roulement ou d'un palier lisse (25), de manière libre sur l'extrémité (24) de l'axe transversal (8), et est positionnée axialement sur l'extrémité (24) par complémentarité de formes entre le bombement (34) et au moins une contre-dépouille (19, 20) du chemin de roulement.

4. Entraînement de rotation selon la revendication 3, **caractérisé en ce que** le palier lisse (25) monté à force dans la douille de roulement (26), est emmanché librement sur l'axe transversal jusqu'à ce qu'un flasque périphérique (36) du palier arrive en butée contre un épaulement d'axe transversal (35), et est alors positionné sur l'axe transversal (8).

5. Entraînement de rotation selon la revendication 1, **caractérisé en ce que** la rainure de guidage (9) présente, environ au milieu entre les deux extrémités de rainure de guidage, une ouverture de montage de douille de roulement (21) au moins accessible de la périphérie extérieure du piston (10).

6. Entraînement de rotation selon la revendication 5, **caractérisé en ce qu'**au niveau de l'ouverture de montage de douille de roulement (21), un côté de la contre-dépouille (19, 20) dans chaque chemin de roulement (17, 18) est supprimé selon une forme d'arc (22, 23) jusqu'à sensiblement le fond de la contre-dépouille et de manière correspondante à la périphérie extérieure de la douille de roulement (26).

7. Entraînement de rotation selon la revendication 1, **caractérisé en ce que** le piston (10) est une pièce moulée en matière plastique, de préférence une pièce moulée par injection.

8. Entraînement de rotation selon respectivement l'une au moins des revendications précédentes, **caractérisé en ce que** la distance active de la butée anti-couple (12) de l'axe (X) pour absorber les couples produits par les douilles de roulement (26) bombées et les chemins de roulement (18, 19) en contre-dépouille, autour de l'axe (X), est augmentée par une section transversale extérieure approximativement rectangulaire de la butée anti-couple (12) avec des côtés de rectangle (28) plus longs s'étendant sensiblement de manière tangentielle à l'axe (X), des côtés de rectangle plus courts (29) parallèles, et des guidages (15) ouverts dans la périphérie extérieure du piston (10).

9. Installation de remplissage pour le conditionnement de boissons, comprenant au moins une vanne papillon (V) pouvant être actionnée par un entraînement de rotation (D) selon la revendication 1.
